# EUROPÄISCHE PATENTSCHRIFT

(11) **EP 3 529 868 B1**
(45) Veröffentlichungstag und Bekanntmachung des Hinweises auf die Patenterteilung: **12.03.2025**
(21) Anmeldenummer: 17825734.1
(22) Anmeldetag: 04.12.2017
(51) Int. Cl.: H02B 1/30, H02B 1/01

(54) **VERBINDUNGSANORDNUNG FÜR DIE VERBINDUNG VON ZWEI SCHALTSCHRANKRAHMENGESTELLEN**
CONNECTOR ASSEMBLY FOR CONNECTING TWO ELECTRICAL CABINETS' FRAMEWORKS
ENSEMBLE CONNECTEUR POUR LA CONNEXION DE DEUX CHÂSSIS D'ARMOIRES ÉLECTRIQUES

(30) Priorität: 12.12.2016 DE 102016124078
(43) Veröffentlichungstag der Anmeldung: 28.08.2019
(73) Patentinhaber: Rittal GmbH & Co. KG, 35745 Herborn (DE)
(72) Erfinder: REUTER, Wolfgang, 56479 Liebenscheid (DE); BRÜCK, Daniel, 35764 Sinn (DE)
(74) Vertreter: Angerhausen, Christoph
(86) Internationale Anmeldenummer: PCT/DE2017/101042
(87) Internationale Veröffentlichungsnummer: WO 2018/108206

(56) Entgegenhaltungen:
- EP-A1- 0 668 009
- EP-A1- 1 601 074
- EP-A2- 0 872 930
- DE-A1- 102008 034 775
- DE-A1- 102014 101 401
- DE-A1- 19 737 668

## Beschreibung

Die Erfindung geht aus von einer Verbindungsanordnung nach dem Oberbegriff des Anspruchs 1. Eine derartige Verbindungsanordnung ist beispielsweise aus der EP 0 668 009 A1 bekannt. Ähnliche Anordnungen beschreiben auch die DE 10 2014 101 401 A1, DE 101 10 689 B4, die EP 1 601 074 A1, die DE 19 737 668 A1, die DE 10 2008 034 775 A1, die EP 0872 930 A2, die DE 101 57 979 C1 und die WO 99/37004 A1.

An derartige Verbindungsanordnungen sind insbesondere die folgenden zwei Anforderungen gestellt: zum einen soll der verwendete Anreihverbinder möglichst in einer Art und Weise an den miteinander zu verbindenden Profilrahmen verbaut sein, dass er möglichst wenig Bauraum einnimmt und somit einem effizienten Innenausbau des Schaltschrankgehäuses nicht entgegensteht, und zum anderen soll die Verbindungsanordnung einfach in der Handhabung sein, wozu es erforderlich ist, dass der Anreihverbinder bei mehr oder weniger exakt zueinander ausgerichteten Profilrahmen stets mit überschaubarem Aufwand an den miteinander zu verbindenden Profilrahmen festgelegt werden können kann.

Bei der aus der DE 101 10 689 B4 bekannten Verbindungsanordnung ist der Anreihverbinder zwar platzsparend verbaut, indem er in einer zwischen den aneinander grenzenden Profilrahmen ausgebildeten Aufnahme aufgenommen ist. Da der Anreihverbinder jedoch über zwei senkrecht zu einer zwischen den Profilrahmen ausgebildeten Dichtebene ausgerichteten Profilseiten festgelegt ist, ist für die Montage des Anreihverbinders an den aneinander grenzenden Profilrahmen stets erforderlich, dass diese vor der Montage des Anreihverbinders exakt zueinander ausgerichtet sind, so dass korrespondierende Bolzendurchlässe von Anreihverbinder und beiden Profilrahmen miteinander fluchten.

Es ist daher die Aufgabe der Erfindung, eine Verbindungsanordnung der eingangs beschriebenen Art derart weiterzuentwickeln, dass sie einerseits platzsparend und andererseits einfach in der Handhabung ist sowie eine hohe Stabilität aufweist.

Diese Aufgabe wird durch eine Verbindungsanordnung mit den Merkmalen des Anspruchs 1 gelöst. Die abhängigen Ansprüche betreffen jeweils vorteilhafte Ausführungsformen der Erfindung.

Demgemäß ist vorgesehen, dass der Befestigungsflansch und die dazu beabstandete weitere Profilseite jeweils mindestens einen Durchlass für die Befestigungsmittel aufweisen, und wobei mindestens einer der Durchlässe des Befestigungsflansches mit mindestens einem der Durchlässe der weiteren Profilseite fluchtet. Dadurch wird erreicht, dass über die fluchtenden Durchlässe von der weiteren Profilseite her der Anreihverbinder an dem Befestigungsflansch festgelegt werden kann. Dazu kann beispielsweise ein Gewindebolzen durch die weitere Profilseite in den Profilrahmen eingesetzt werden, bis dieser an dem Befestigungsflansch den Profilrahmen wieder verlässt, um dort in die Befestigungsseite des Anreihverbinders einzutreten, insbesondere in eine Gewindeaufnahme der Befestigungsseite, um die Befestigungsseite so an dem Befestigungsflansch festzulegen. Das Befestigungsmittel erstreckt sich von der von der Dichtkante abgewandten Außenseite durch die fluchtenden Durchlässe in die Aufnahme hinein.

Dadurch, dass die gegenüber liegenden Befestigungsflansche, an welchen der Anreihverbinder festgelegt ist, parallel zu der zwischen den Dichtkanten ausgebildeten Dichtebene ausgerichtet sind, ist es möglich, dass bereits bei grob zueinander vorausgerichteten Profilrahmen, die Profilrahmen über den Anreihverbinder lose miteinander verbunden werden können, so dass sich mit der Festlegung der Profilrahmen an dem Anreihverbinder die Profilrahmen zueinander ausrichten. Dazu ist beispielsweise denkbar, dass die Befestigungsflansche über Schraubverbindungen an den jeweiligen Befestigungsseiten des Anreihverbinders festgelegt werden, wozu die Befestigungsseiten des Anreihverbinders beispielsweise Gewindeaufnahmen aufweisen können.

Eine der äußeren Dichtkanten kann von einer Umkantung von mehr als 180° gebildet sein, so dass sich der Dichtsteg von der Dichtkante in Richtung des Befestigungsflansches verjüngt und/oder hinterschnittig ausgebildet ist. Diese Ausführungsform ermöglicht insbesondere den sicheren Sitz einer Aufsteckdichtung auf dem Dichtsteg. Demgemäß kann vorgesehen sein, dass über die Dichtkante mindestens eines der Dichtstege eine Aufsteckdichtung auf den Dichtsteg aufgesteckt ist, die eine sich zu ihrer Öffnung hin verjüngende Nut aufweist.

Die Nut kann von zwei konisch aufeinander zulaufenden Seitenwänden der Aufsteckdichtung begrenzt sein, wobei mindestens eine der Seitenwände einen die Nut weiter verjüngenden Vorsprung aufweist. Mit Hilfe des Vorsprungs wird insbesondere in Kombination mit der hinterschnittigen Geometrie der Dichtkante ein besonders sicherer Sitz der Aufsteckdichtung auf dem Dichtsteg erreicht.

Die Nut kann von zwei Seitenwänden begrenzt sein, zwischen deren freien Enden die Öffnung der Nut ausgebildet ist, wobei die Nut weiterhin von einer die Seitenwände über ihre den freien Enden gegenüber liegende Enden verbindende Rückwand begrenzt ist, die an ihrer der Nut zugewandten Innenseite einen Haftvermittler, insbesondere eine Klebeschicht aufweist. Auch diese Maßnahme trägt dazu bei, den sicheren Sitz der Aufsteckdichtung auf dem Dichtsteg weiter zu verbessern.

Mindestens einer der Befestigungsflansche kann über eine 90°-Abkantung in den jeweiligen Dichtsteg übergehen. Der Profilrahmen kann insbesondere aus Profilstreben gebildet sein, die im Querschnitt eine Geometrie aufweisen, wie sie in der nachveröffentlichten DE 10 2015 121 192 A1 beschrieben ist. Eine ähnliche Geometrie zeigt auch die DE 10 2014 101 404 A1.

Das Befestigungsmittel kann folglich insbesondere ein Befestigungsbolzen, beispielsweise ein Gewindebolzen oder eine Schraube sein.

Weiterhin kann das Befestigungsmittel an seinem freien Ende, über das das Befestigungsmittel in die Aufnahme hineinragt, in einer Befestigungsaufnahme in einer Befestigungsseite des Anreihverbinders, über die der Anreihverbinder an einem der Befestigungsflansche anliegt, festgelegt sein.

Der Anreihverbinder weist zwei gegenüberliegende Befestigungsseiten auf, über die er an jeweils einem der gegenüberliegenden Befestigungsflansche festgelegt ist.

Die Befestigungsseiten des Anreihverbinders können über eine Verbindungsseite miteinander verbunden sein, wobei in einem jeweiligen Übergangsbereich zwischen der Verbindungsseite und einer der beiden Befestigungsseiten der Anreihverbinder an einem der beiden Dichtstege anliegt, und wobei die Verbindungsseite einen Stoßbereich, in dem die Dichtstege über ein zwischen ihnen angeordnetes Dichtelement aneinander grenzen, unter einem Abstand zu den Dichtstegen überragt, so dass ein Freiraum zwischen den Dichtstegen und der Verbindungsseite gebildet ist, in den das Dichtelement hineinragt. Es wird somit eine besonders platzsparende Verbindungsanordnung geschaffen.

Die Verbindungsseite kann mindestens eine Pfeilstanzung aufweisen. Die Pfeilstanzung kann insbesondere dazu dienen, in Verbindung mit einer weiteren Markierung auf der Profilstrebe des Profilrahmens, an der der Anreihverbinder festgelegt werden soll, eine gewünschte Positionierung des Anreihverbinders in Bezug auf die Profilstrebe, beispielsweise die Anordnung des Anreihverbinders auf einer bestimmten vertikalen Höhe, zu ermöglichen. Weiterhin kann vorgesehen sein, dass in die Pfeilstanzung ein Gewindebolzen, über den der Anreihverbinder an einem der Befestigungsflansche festgelegt ist, hineinragt, wobei mindestens ein Klemmzahn an einer Berandung der Pfleilstanzung in ein Gewinde des Gewindebolzens unter Vorspannung eingreift und somit den Gewindebolzen festlegt.

Der Gewindebolzen kann weiterhin eine Kegelspitze aufweisen, die in das Gewinde des Gewindebolzens übergeht, so dass beim Festlegen des Anreihverbinders an einem der Befestigungsflansche der mindestens eine Klemmzahn entlang der sich in Bolzenlängsrichtung aufweitenden Kegelspitze vorgespannt wird.

Der Anreihverbinder kann einteilig oder mehrteilig ausgebildet sein. Wenn der Anreihverbinder einteilig ausgebildet ist, so ist es insbesondere möglich, dass dieser als ein gestanztes und gekantetes Blechformteil ausgebildet ist, wobei die Befestigungsseiten des Anreihverbinders für die Festlegung des Anreihverbinders an den Befestigungsflanschen der Profilstreben ein geeignetes Befestigungsmittel aufweisen können. Diese Befestigungsmittel können beispielsweise in Form eines Gewindedurchzugs oder einer aufgeschweißten bzw. anderweitig festgelegten Gewindemutter ausgebildet sein.

Weitere Einzelheiten der Erfindung werden anhand der nachstehenden Figuren erläutert. Dabei zeigt:
- Figur 1: einen Horizontalquerschnitt einer ersten Ausführungsform einer Verbindungsanordnung;
- Figur 2: eine Variante des Anreihverbinders der Ausführungsform gemäß Figur 1;
- Figur 3: eine Seitenansicht der Verbindungsanordnung gemäß Figur 1;
- Figur 4: ein erstes Verbinderteil einer weiteren Ausführungsform eines Anreihverbinders, der nicht zur Erfindung gehört;
- Figur 5: ein zweites Verbinderteil eines Anreihverbinders entsprechend der Ausführungsform gemäß Figur 4;
- Figur 6: das Verbinderteil gemäß Figur 4 an einem Vertikalprofil festgelegt;
- Figur 7: eine Verbindungsanordnung unter Verwendung der Verbinderteile gemäß den Figuren 4 und 5;
- Figur 8: eine Querschnittsansicht eines Dichtelements gemäß einer Ausführungsform der Erfindung;
- Figur 9: ein Dichtelement gemäß Figur 8 in perspektivischer Darstellung;
- Figur 10: eine weitere Ausführungsform einer Verbindungsanordnung, die nicht zur Erfindung gehört und bei der der Anreihverbinder als ein Innenausbauchassis ausgebildet ist; und
- Figur 11: eine Detailansicht des Anreihverbinders gemäß Figur 10.

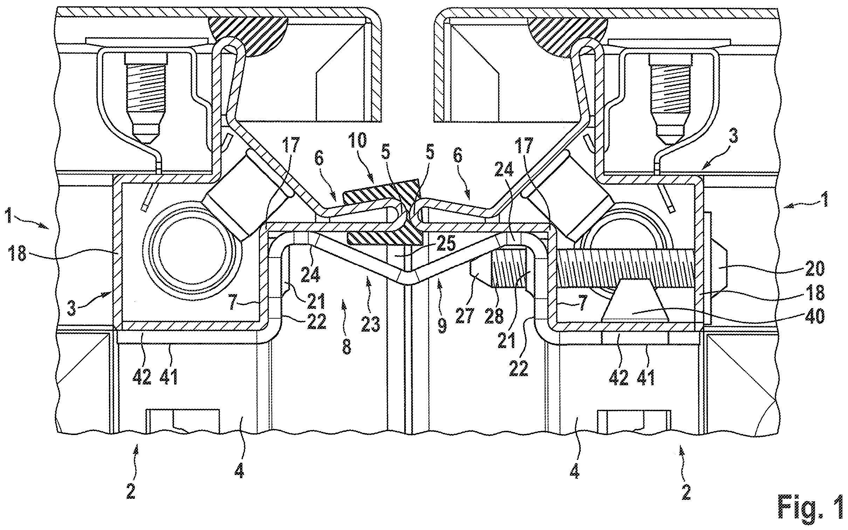

Die Figur 1 zeigt eine erste Ausführungsform einer Verbindungsanordnung, bei der ein erstes und ein zweites Schaltschrankrahmengestell 1 über einen Anreihverbinder 9 aneinander festgelegt sind. Die Schaltschrankrahmengestelle 1 weisen jeweils einen Profilrahmen 2 auf, über den sie aneinandergrenzen. Der Profilrahmen 2 selbst ist wiederum aus zwei Vertikalstreben 3 und zwei Horizontalstreben 4 ausgebildet, von denen je Profilrahmen 2 nur eine Vertikalstrebe 3 und eine Horizontalstrebe 4 gezeigt ist. Die Profilrahmen 2 grenzen über am Ende von Dichtstreben 6 ausgebildete Dichtkanten 5 bzw. ein dazwischen angeordnetes Dichtelement 10 aneinander, so dass eine sich senkrecht zu den Dichtstegen 6 erstreckende Dichtebene ausgebildet wird.

Der Anreihverbinder 9 ist als ein gestanztes und gekantetes Blechformteil ausgebildet, das über Befestigungsseiten 22 an Befestigungsflanschen 7 der Profilrahmen 2 festgelegt ist. Die Befestigungsflansche 7 erstrecken sich von ihrer jeweiligen Dichtkante 5 zurückversetzt parallel zu der beschriebenen Dichtebene und sind dementsprechend parallel voneinander beabstandet, so dass sie zwischen sich einen Aufnahmeraum 8 bilden, in dem der Anreihverbinder platzsparend aufgenommen werden kann und somit bis auf die Auflageflansche 21 ausschließlich in dem lichten Maß zwischen dem aneinandergrenzenden Profilrahmen 2 aufgenommen ist. Einer der Auflageflansche 41 weist einen Haken 40 auf, über den der Anreihverbinder 9 in eine Systemlochung des Profilrahmens 2 eingreift, so dass der Anreihverbinder 9 in Bezug auf den betreffenden Profilrahmen vorausgerichtet ist.

Für die Befestigung der beiden Profilrahmen 2 über den Anreihverbinder 9 aneinander ist es beispielsweise denkbar, dass der Anreihverbinder 9 in einen ersten der beiden Profilrahmen 2, hier in den in der Darstellung rechten Profilrahmen 2, über seinen Haken 40 eingehängt wird, so dass Bolzendurchlässe in dem Befestigungsflansch 7 sowie der Profilseite 18 der betreffenden Vertikalstrebe 3 fluchten und somit für den Durchlass eines Bolzens 20 vorausgerichtet sind. Die Befestigungsseite 22 weist eine Befestigungsaufnahme 21 in Form eines Gewindedurchzugs auf, so dass durch Einschrauben des Bolzens 20 durch die fluchtenden Durchlässe in den Profilseiten 7 und 18 hindurch der Anreihverbinder 9 an dem in der Darstellung rechten Profilrahmen 2, insbesondere an seiner Vertikalstrebe 3 festgelegt werden kann.

In einem zweiten Schritt kann eine Aufsteckdichtung 10 auf mindestens einen der beiden in der Dichtebene angeordneten Dichtstege 6 aufgesteckt werden.

Der Anreihverbinder 9 weist erkennbar eine Kontur auf, die mit ihren Seiten 41, 22, 24 eine Außenkontur der Vertikalstrebe 3 abbildet, so dass durch das Annähern der in der Darstellung linken Vertikalstrebe 3 unter Ausbildung eines Formschlusses dieser mit dem Anreihverbinder 9 eine Vorausrichtung des in der Darstellung linken Profilrahmens 2 in Bezug auf den Anreihverbinder 9 und damit in Bezug auf den weiteren Profilrahmen 2 hergestellt werden kann.

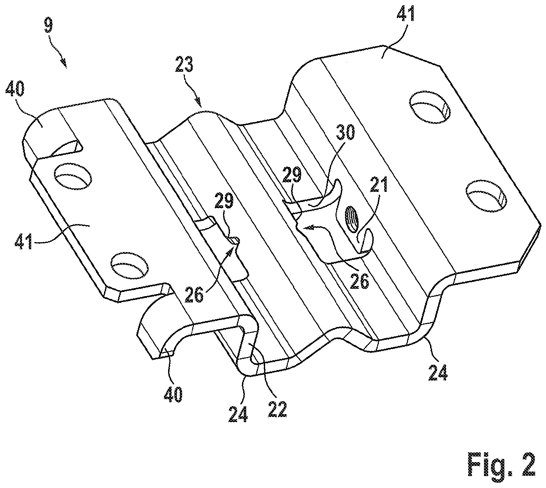

In Figur 2 ist eine Detailansicht einer Variante des Anreihverbinders 9 gemäß der in Figur 1 gezeigten Ausführungsform dargestellt. Dieser weist an gegenüber liegenden Enden jeweils einen Auflageflansch 41 auf, über den der Anreihverbinder 9, wie in Bezug auf Figur 1 beschrieben, an einer weiteren Profilseite 41 zur Anlage gebracht werden kann, welche sich unter einem 90°-Winkel zu dem Befestigungsflansch 7 erstreckt. Unter einem 90°-Winkel zu den Auflageflanschen erstreckt sich jeweils eine Befestigungsseite 22 mit einem Gewindedurchzug 21, die entsprechend Figur 1 darauf ausgelegt sind, an dem Befestigungsflansch 7 der miteinander zu verbindenden Profilstreben zur Anlage zu kommen.

Die Befestigungsseiten 22 gehen über jeweils einen Übergangsbereich 25 in die Verbindungsseite 23 über. Der Übergangsbereich 24 ist dazu eingerichtet, an dem Dichtsteg 6 an der der Aufnahme 8 zugewandten Seite des Dichtstegs 6 zur Anlage zu kommen (vgl. Figur 1). Angrenzend an den Gewindedurchzug 21 weist der Anreihverbinder 29 eine Pfeilstanzung 26 auf, welche dazu dienen kann, den Anreihverbinder 9 in Bezug auf das Profil zu positionieren, beispielsweise, indem die Pfeilstanzung 26 mit einer entsprechenden Markierung auf einem der miteinander zu verbindenden Profile zur Deckung gebracht wird. Die Pfeilstanzung 26 weist weiterhin zwei Klemmzähne 29 an ihrer Berandung 30 auf, welche mit den Gewindedurchzügen 21 fluchten, so dass ein durch die Gewindedurchzüge 21 eingeschraubter Bolzen auf die Klemmzähne 29 trifft, wenn dieser beispielsweise vollständig eingeschraubt ist, so dass der Bolzen in Bezug auf den Anreihverbinder 9 fixiert wird.

Die Verbindungsseite 23 weist weiterhin einen gegenüber den Übergangsbereichen 24 erhabenen Mittenabschnitt auf, wodurch, wie in Figur 1 gezeigt ist, zwischen dem Übergangsbereich 24 und den Dichtstegen 6 eine Aufnahme 25 für ein Dichtelement 10 geschaffen wird.

An den in der Darstellung rechten Auflageflansch 41 sind zwei Haken 40 angeformt, über die der Anreihverbinder 9, wie dies ebenfalls bereits mit Bezug auf Figur 1 beschrieben worden ist, über eine Systemlochung oder dergleichen in einem der miteinander zu verbindenden Profilstreben eingehängt werden kann und somit für das Verschrauben mit einem ersten Profil der miteinander zu verbindenden Profile vorausgerichtet ist.

Nachdem somit der Anreihverbinder 9 entsprechend der Darstellung in Figur 1 über die Haken 40 gegenüber einer ersten der Profilstreben vorpositioniert und über den Bolzen 20 mit dieser Profilstrebe verbunden worden ist, kann die zweite Profilstrebe (in der Darstellung gemäß Figur 1 die linke Profilstrebe 3), der Anordnung aus erster Profilstrebe 3 und mit dieser verbundenem Anreihverbinder 9 angenähert werden, gegebenenfalls nachdem eine Aufsteckdichtung 10 auf mindestens einen der beiden zueinander ausgerichteten Dichtstege 6 der beiden Profilstreben 3 aufgesteckt worden ist. Wenn die weitere Profilstrebe 3 in Formschluss mit dem Anreihverbinder 9 gebracht worden ist, indem der Auflageflansch 41 an der weiteren Profilseite 42 anliegt, die Befestigungsseite 22 an dem Befestigungsflansch 7 anliegt sowie der Übergangsbereich 24 an dem Dichtsteg 6 anliegt, weist die so gegenüber der Anordnung aus erster Profilstrebe 2 und Anreihverbinder 9 vorausgerichtete weitere Profilstrebe 3 noch einen Bewegungsfreiheitsgrad in Richtung senkrecht zu den Befestigungsflanschen 7 bzw. den Befestigungsseiten 22 auf. Wird somit nunmehr entsprechend der in der Darstellung gemäß Figur 1 rechten Profilstrebe 3 ein weiterer Verbindungsbolzen (nicht dargestellt) durch die in der Darstellung linke Profilstrebe 3 über die Profilseite 18, durch das Innere der Profilstrebe 3 sowie durch den Befestigungsflansch 7 hindurch eingesteckt, bis sich der Bolzen in den Gewindedurchzug 21 in der Befestigungsseite 22 hinein erstreckt, so kann durch weiteres Einschrauben des Bolzens in die Befestigungsaufnahme 21 die in der Darstellung linke Profilstrebe 3 der in der Darstellung rechten Profilstrebe 3 weiter angenähert werden, derart, dass das zwischen den Dichtstegen 6 angeordnete Dichtelement komprimiert und damit eine Dichtwirkung erzeugt wird.

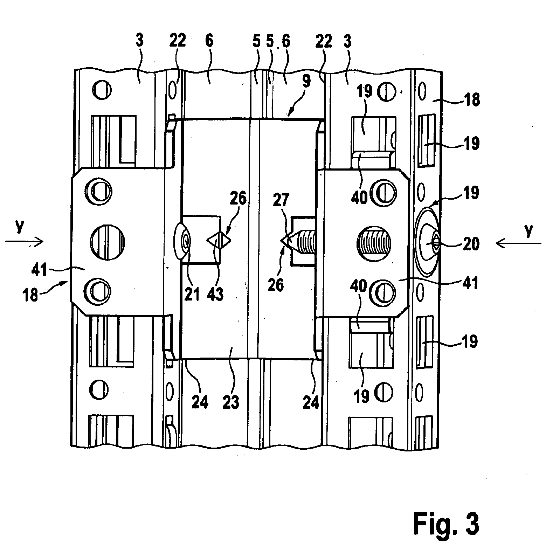

In Figur 3 ist ergänzend zu den Darstellungen gemäß Figur 1 und 2 noch erkennbar, dass die Pfeilstanzung 26 insbesondere dazu geeignet ist, den Anreihverbinder 9 in Bezug auf die miteinander zu verbindenden Profilstreben 3 vorauszurichten. Dazu kann die Profilstrebe 3, insbesondere der Dichtsteg 6 dieser, eine Anordnung aus regelmäßig beabstandeten Dreieckstanzungen aufweisen, wie dies in Figur 3 gezeigt ist.

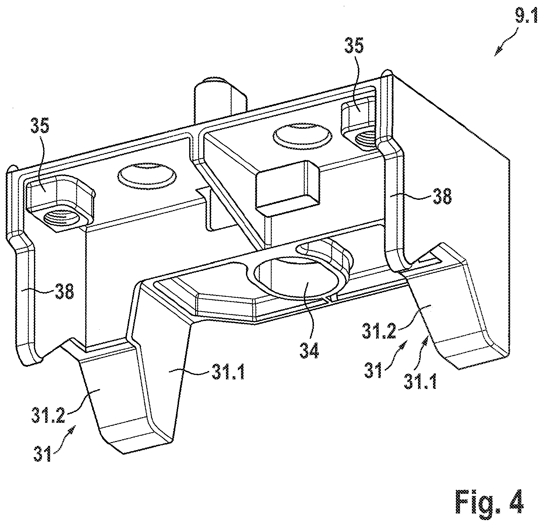

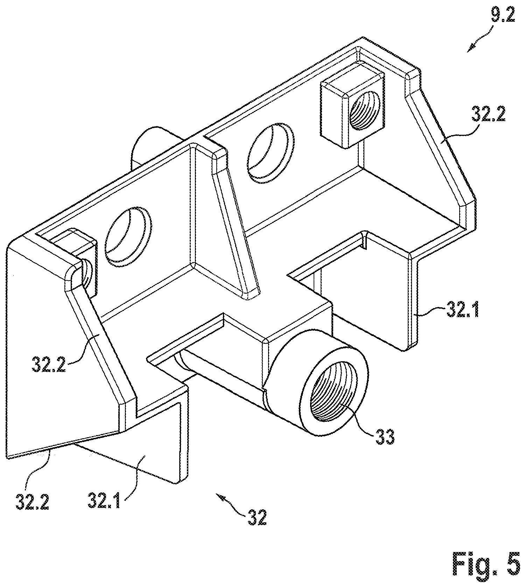

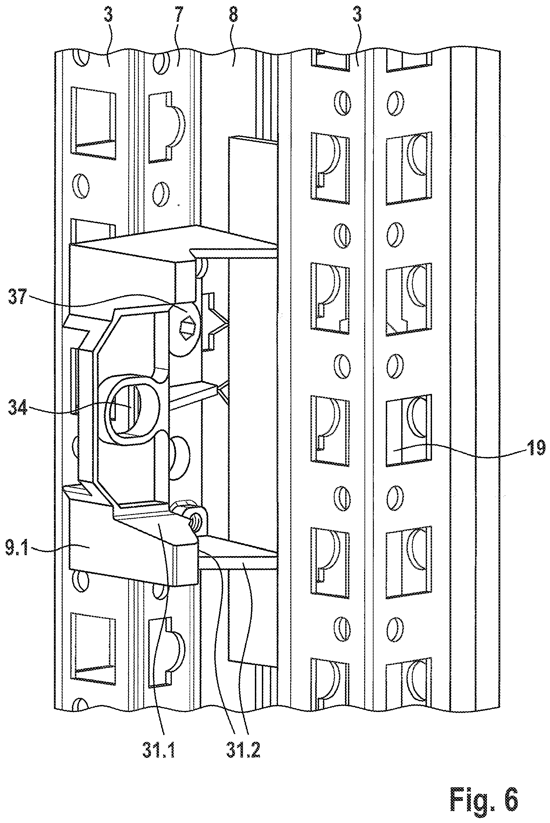

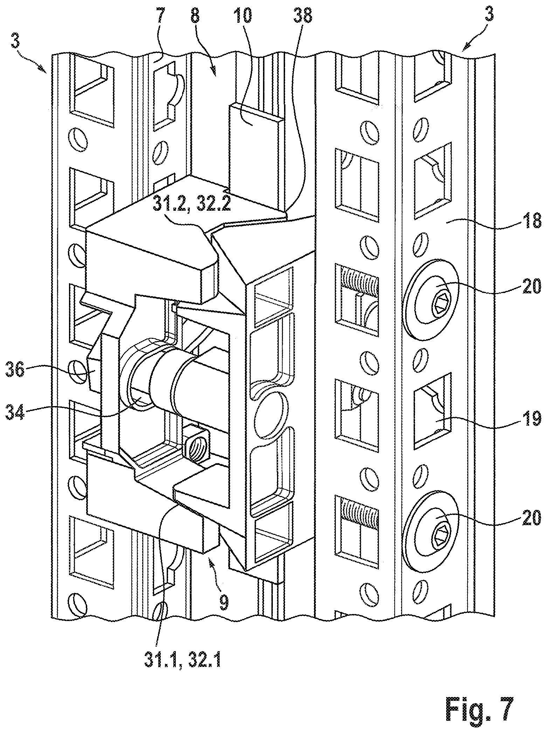

In den Figuren 4 bis 7 ist eine weitere Ausführungsform der erfindungsgemäßen Verbindungsanordnung gezeigt. Bei dieser ist der Anreihverbinder 9 zweiteilig ausgeführt und weist ein erstes Verbinderteil 9.1 (Figur 4) und ein zweites Verbinderteil 9.2 (Figur 5) auf, von denen eines an einem ersten der miteinander zu verbindenden Profilstreben 3 und ein zweites mit der jeweils anderen festgelegt wird, und wobei im Anschluss daran die beiden Verbinderteile 9.1, 9.2 mit den verbundenen Profilstreben 3 zueinander geführt werden. An dabei aufeinandertreffenden Berührungsflächen der Verbinderteile 9.1 und 9.2 sind Zentrierkonturen 31, 32 ausgebildet, welche dazu eingerichtet sind, im Zuge des Annäherns der beiden Profilstreben 3 aneinander die Profilstreben 3 zueinander auszurichten, wobei ein Formschluss zwischen den Zentrierkonturen 31, 32 genau dann erreicht wird, wenn eine exakte Positionierung der Profilstreben 3 in Tiefenrichtung und in Vertikalrichtung zueinander erreicht ist.

Demgemäß ist der Anreihverbinder 9 somit zweiteilig ausgebildet und weist ein erstes Verbinderteil 9.1 auf, das an einem ersten der gegenüber liegenden Befestigungsflansche 9 festgelegt wird. In einem zweiten Schritt wird dann das zweite Verbinderteil 9.2 an dem Befestigungsflansch 7 der gegenüber liegenden Profilstrebe 3 festgelegt. Das erste Verbinderteil 9.1 weist an einer dem zweiten Verbinderteil 9.2 zugewandten Außenseite eine erste Zentrierkontur 31 und das zweite Verbinderteil 9.2 an einer dem ersten Verbinderteil 9.1 zugewandten Außenseite eine zu der ersten Zentrierkontur 31 komplementäre zweite Zentrierkontur 32 auf. Die erste und die zweite Zentrierkontur 31, 32 sind dazu eingerichtet, nur in einer Montageposition, in der die seitlichen Profilrahmen 2 über ihre Dichtkanten 5 und gegebenenfalls ein dazwischen angeordnetes Dichtelement 10 aneinandergrenzen, in Formschluss zu stehen.

Die erste und die zweite Zentrierkontur 31, 32 sind dabei zweiteilig ausgebildet, mit jeweils einem ersten Zentrierkonturabschnitt 31.1, 32.1 für die Ausrichtung der Profilrahmen 2 in Vertikalrichtung zueinander, und mit jeweils einem zweiten Zentrierkonturabschnitt 31.2., 32.2 für die Ausrichtung der Profilrahmen 2 in Tiefenrichtung zueinander.

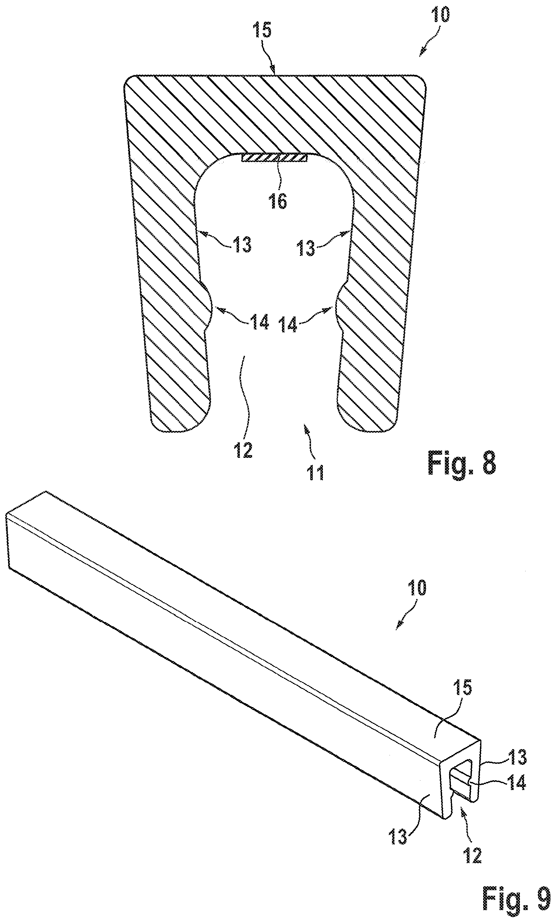

Eine beispielhafte Geometrie einer Aufsteckdichtung 10 ist in den Figuren 8 und 9 beschrieben. Die Aufsteckdichtung 10 weist eine sich zu ihrer Öffnung 11 hin verjüngende Nut 12 auf. Dazu ist die Nut 12 derart ausgebildet, dass sie von zwei konisch aufeinander zulaufenden Seitenwänden 13 begrenzt ist. Um die Aufsteckdichtung 10 noch besser auf dem hinterschnittigen Dichtsteg 6 (siehe Figur 1) fixieren zu können, weist die Aufsteckdichtung 10 an den gegenüber liegenden Seitenwänden 13 einen die Nut 12 weiter verjüngenden Vorsprung 14 auf. Um die Aufsteckdichtung noch besser auf dem Dichtsteg 6 festlegen zu können, weist die Nut eine die Seitenwände 13 über ihre den freien Enden gegenüber liegenden Ende verbindende Rückwand 15 auf, die an ihrer der Nut 12 zugewandten Innenseite einen Haftvermittler 16 in Form einer Klebeschicht aufweist.

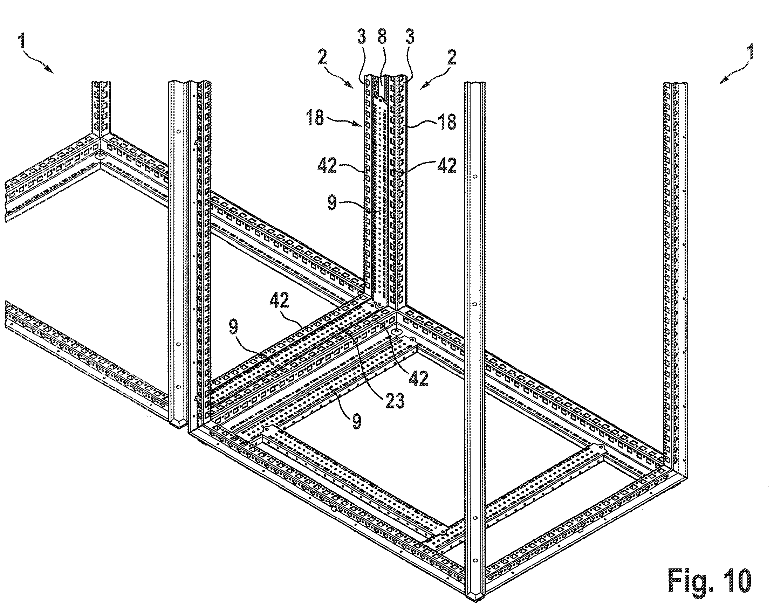

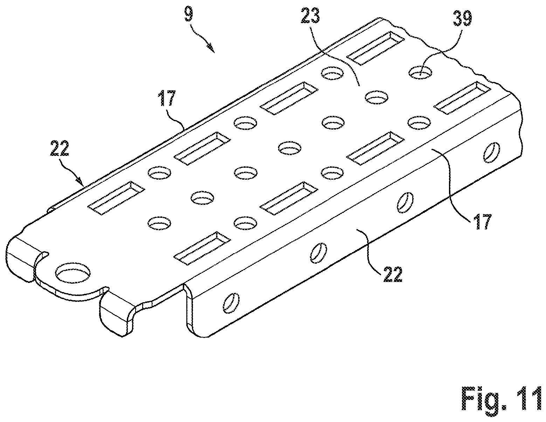

In den Figuren 10 und 11 ist eine weitere Ausführungsform einer Verbindungsanordnung gezeigt, bei der der Anreihverbinder 9 gerade als ein Montagechassis für den Innenausbau des Schaltschranks ausgebildet ist. Demgemäß weist der Anreihverbinder 9 eine Verbindungsseite 23 auf, von der sich an gegenüber liegenden Längskanten jeweils eine Befestigungsseite 22 unter einem 90°-Winkel erstreckt, so dass der Anreihverbinder 9 über die Befestigungsseiten 22 an gegenüber liegenden Befestigungsflanschen 7 miteinander zu verbindender Profilstreben zur Anlage gebracht und mit diesen verschraubt werden kann, analog zu der in Figur 1 gezeigten Ausführungsform.

Die Verbindungsseite 23 weist eine Systemlochung 39 auf, welche in einem Rastermaß angeordnet sein kann, welche dem Rastermaß der miteinander verbundenen Profilrahmen entspricht, so dass zwischen den weiteren Profilseiten 42 und der Verbindungsseite 23 ein einheitliches Rastermaß eingehalten ist, wodurch der Innenausbau der aneinandergrenzenden Schaltschrankrahmengestelle 1, wie dies in Figur 10 gezeigt ist, auch rahmengestellübergreifend erfolgen kann. Zur Schaffung einer durchgängigen Montageebene können die Verbindungsseite 23 des Anreihverbinders 9 sowie die weiteren Profilseiten 42 in derselben Ebene angeordnet sein.

### Bezugszeichenliste

- 1: Schaltschrankrahmengestell
- 2: Profilrahmen
- 3: Vertikalstrebe
- 4: Horizontalstrebe
- 5: Dichtkante
- 6: Dichtsteg
- 7: Befestigungsflansch
- 8: Aufnahme
- 9: Anreihverbinder
- 9.1: erstes Verbinderteil
- 9.2: zweites Verbinderteil
- 10: Dichtelement
- 11: Öffnung
- 12: Nut
- 13: Seitenwand
- 14: Vorsprung
- 15: Rückwand
- 16: Haftvermittler
- 17: 90°-Abkantung
- 18: Profilseite
- 19: Durchlass
- 20: Befestigungsmittel
- 21: Befestigungsaufnahme
- 22: Befestigungsseite
- 23: Verbindungsseite
- 24: Übergangsbereich
- 25: Freiraum
- 26: Pfeilstanzung
- 27: Kegelspitze
- 28: Gewinde
- 29: Klemmzahn
- 30: Berandung
- 31: erste Zentrierkontur
- 31.1: erster Zentrierkonturabschnitt der ersten Zentrierkontur
- 31.2.: zweiter Zentrierkonturabschnitt der ersten Zentrierkontur
- 32: zweite Zentrierkontur
- 32.1: erster Zentrierkonturabschnitt der zweiten Zentrierkontur
- 32.2: zweiter Zentrierkonturabschnitt der zweiten Zentrierkontur
- 33: Gewindebohrung
- 34: Bolzendurchlass
- 35: Gewindeaufnahme
- 36: Verbindungsbolzen
- 37: Befestigungsbolzen
- 38: Ausnehmung
- 39: Systemlochung
- 40: Haken
- 41: Auflageflansch
- 42: weitere Profilseite
- 43: Markierung
- y: Bolzendurchlassrichtung

## Patentansprüche

1. Verbindungsanordnung, die ein erstes und ein zweites Schaltschrankrahmengestell (1) aufweist, die jeweils einen rechteckigen, seitlichen Profilrahmen (2) aus zwei Vertikalstreben (3) und zwei Horizontalstreben (4) aufweisen, wobei die Profilrahmen (2) über einen Anreihverbinder (9) miteinander verbunden sind, wobei die Schaltschrankrahmengestelle (1) über äußere Dichtkanten (5) der Profilrahmen (2) aneinander grenzen und die äußeren Dichtkanten (5) an dem jeweiligen freien Ende eines Dichtsteges (6) des Profilrahmens (2) angeordnet sind, wobei von den Dichtstegen (6) jeweils ein Befestigungsflansch (7) von der äußeren Dichtkante (5) zurückversetzt abgekantet ist, so dass die sich gegenüber liegenden Befestigungsflansche (7) zwischen sich eine Aufnahme (8) für den Anreihverbinder (9) für die Profilrahmen (2) abgrenzen, die weiterhin durch die aneinandergrenzenden Dichtstege (6) und ein zwischen den Dichtstegen (6) angeordnetes Dichtelement (10) abgegrenzt ist, wobei der Anreihverbinder (9) zwei gegenüber liegende Befestigungsseiten (22) aufweist, über die er an jeweils einem der gegenüberliegenden Befestigungsflansche (7) festgelegt ist, wobei der Anreihverbinder (9) in der Aufnahme (8) angeordnet ist, der an den gegenüber liegenden Befestigungsflanschen (7) festlegt ist, wobei mindestens einer der Profilrahmen (2) an einer von seiner Dichtkante (5) abgewandten Außenseite eine weitere Profilseite (18) aufweist, die beabstandet zu dem Befestigungsflansch (7) des Profilrahmens (2) angeordnet ist, **dadurch gekennzeichnet, dass** der Befestigungsflansch (7) und die dazu beabstandete weitere Profilseite (18) jeweils mindestens einen Durchlass (19) für ein Befestigungsmittel (20) aufweisen, und wobei mindestens einer der Durchlässe (19) des Befestigungsflansches (7) mit mindestens einem der Durchlässe (19) der weiteren Profilseite (18) fluchtet, wobei sich das Befestigungsmittel (20) von der von der Dichtkante (5) abgewandten Außenseite durch die fluchtenden Durchlässe (19) in die Aufnahme (8) hinein erstreckt, und wobei das Befestigungsmittel (20) an seinem freien Ende, über das das Befestigungsmittel (20) in die Aufnahme (8) hineinragt, in einer Befestigungsaufnahme (21) in einer Befestigungsseite (22) des Anreihverbinders (9), über die der Anreihverbinder (9) an einem der Befestigungsflansche (7) anliegt, festgelegt ist.

2. Verbindungsanordnung nach Anspruch 1, bei der mindestens eine der äußeren Dichtkanten (5) von einer Umkantung von mehr als 180° gebildet ist, so dass sich der Dichtsteg (6) von der Dichtkante (5) in Richtung des Befestigungsflansches (7) verjüngt und/oder hinterschnittig ausgebildet ist.

3. Verbindungsanordnung nach Anspruch 2, bei der über die Dichtkante (5) mindestens eines der Dichtstege (6) eine Aufsteckdichtung (10) auf den Dichtsteg (6) aufgesteckt ist, die eine sich zu ihrer Öffnung (11) hin verjüngende Nut (12) aufweist.

4. Verbindungsanordnung nach Anspruch 3, bei der die Nut (12) von zwei konisch aufeinander zulaufenden Seitenwänden (13) der Aufsteckdichtung (10) begrenzt ist, wobei mindestens eine der Seitenwände (13) einen die Nut (12) weiter verjüngenden Vorsprung (14) aufweist.

5. Verbindungsanordnung nach Anspruch 3 oder 4, bei der die Nut (12) von zwei Seitenwänden (13) begrenzt ist, zwischen deren freien Enden die Öffnung (11) der Nut (12) ausgebildet ist, und wobei die Nut (12) weiterhin von einer die Seitenwände (13) über ihre den freien Enden gegenüber liegende Enden verbindende Rückwand (15) begrenzt ist, die an ihrer der Nut (12) zugewandten Innenseite einen Haftvermittler (16), insbesondere eine Klebeschicht aufweist.

6. Verbindungsanordnung nach einem der vorangegangen Ansprüche, bei der mindestens einer der Befestigungsflansche (7) über eine 90°-Abkantung (17) in den jeweiligen Dichtsteg (6) übergeht.

7. Verbindungsanordnung nach einem der vorangegangen Ansprüche, bei der die weitere Profilseite (18) parallel beabstandet zu dem Befestigungsflansch (7) des Profilrahmens (2) angeordnet ist.

8. Verbindungsanordnung nach Anspruch 1, bei der das Befestigungsmittel (20) ein Befestigungsbolzen, etwa ein Gewindebolzen, ist.

9. Verbindungsanordnung nach Anspruch 1, bei der die Befestigungsseiten (22) des Anreihverbinders (9) über eine Verbindungsseite (23) miteinander verbunden sind, wobei in einem jeweiligen Übergangsbereich (24) zwischen der Verbindungsseite (23) und einer der beiden Befestigungsseiten (22) der Anreihverbinder (9) an einem der beiden Dichtstege (6) anliegt, und wobei die Verbindungsseite (23) einen Stoßbereich, in dem die Dichtstege (6) über ein zwischen ihnen angeordnetes Dichtelement (10) aneinander grenzen, unter einem Abstand zu den Dichtstegen (6) überragt, sodass ein Freiraum (25) zwischen den Dichtstegen (6) und der Verbindungsseite (23) gebildet ist, in den das Dichtelement (10) hineinragt.

10. Verbindungsanordnung nach Anspruch 9, bei der die Verbindungsseite (23) mindestens eine Pfeilstanzung (26) aufweist, in die ein Gewindebolzen (20), über den der Anreihverbinder (9) an einem der Befestigungsflansche (7) festgelegt ist, hineinragt, wobei mindestens ein Klemmzahn (29) an einer Berandung (30) der Pfleilstanzung (26) in ein Gewinde (28) des Gewindebolzens (20) unter Vorspannung eingreift und somit den Gewindebolzen (20) festlegt.

11. Verbindungsanordnung nach Anspruch 10, bei der der Gewindebolzen (20) eine Kegelspitze (27) aufweist, die in das Gewinde (28) des Gewindebolzens (20) übergeht, so dass beim Festlegen des Anreihverbinders (9) an einem der Befestigungsflansche (7), der mindestens eine Klemmzahn (29) entlang der sich in Bolzenlängsrichtung aufweitenden Kegelspitze (27) vorgespannt ist.

## Claims

1. Connector assembly which has a first and a second switchgear cabinet rack (1) which each have a rectangular, lateral profile frame (2) composed of two vertical struts (3) and two horizontal struts (4), wherein the profile frames (2) are connected to one another via a line-up connector (9), wherein the switchgear cabinet racks (1) adjoin one another via outer sealing edges (5) of the profile frames (2), and the outer sealing edges (5) are arranged at the respective free end of a sealing web (6) of the profile frame (2), wherein in each case one fastening flange (7) of the sealing webs (6) is bent so as to be set back from the outer sealing edge (5), such that the fastening flanges (7) which lie opposite one another delimit between them a receptacle (8) for the line-up connector (9) for the profile frames (2), which receptacle is furthermore delimited by the sealing webs (6) which adjoin one another and a sealing element (10) which is arranged between the sealing webs (6), wherein the line-up connector (9) has two fastening sides (22) which lie opposite one another and via which it is fixed in each case to one of the fastening flanges (7) which lie opposite one another, wherein the line-up connector (9) is arranged in the receptacle (8) which is fixed to the fastening flanges (7) which lie opposite one another, wherein at least one of the profile frames (2) has, on an outer side which faces away from its sealing edge (5), a further profile side (18) which is arranged at a distance from the fastening flange (7) of the profile frame (2), **characterized in that** the fastening flange (7) and the further profile side (18) which is at a distance therefrom each have at least one passage (19) for a fastening means (20), and wherein at least one of the passages (19) of the fastening flange (7) is aligned with at least one of the passages (19) of the further profile side (18), wherein the fastening means (20) extends from the outer side which faces away from the sealing edge (5) through the aligned passages (19) into the receptacle (8), and wherein the fastening means (20) is fixed at its free end, via which the fastening means (20) projects into the receptacle (8), in a fastening receptacle (21) in a fastening side (22) of the line-up connector (9), via which fastening side the line-up connector (9) bears against one of the fastening flanges (7).

2. Connector assembly according to claim 1, in which at least one of the outer sealing edges (5) is formed by a bend of more than 180°, such that the sealing web (6) tapers from the sealing edge (5) in the direction of the fastening flange (7) and/or is of undercut design.

3. Connector assembly according to claim 2, in which a plug-on seal (10) which has a groove (12) tapering towards its opening (11) is plugged onto the sealing web (6) via the sealing edge (5) of at least one of the sealing webs (6).

4. Connector assembly according to claim 3, in which the groove (12) is delimited by two side walls (13) of the plug-on seal (10) which taper conically towards one another, wherein at least one of the side walls (13) has a projection (14) tapering the groove (12) further.

5. Connector assembly according to claim 3 or 4, in which the groove (12) is delimited by two side walls (13), between the free ends of which the opening (11) of the groove (12) is formed, and wherein the groove (12) is furthermore delimited by a rear wall (15) which connects the side walls (13) via their ends lying opposite the free ends and which has an adhesion promoter (16), in particular an adhesive layer, on its inner side facing the groove (12).

6. Connector assembly according to one of the preceding claims, in which at least one of the fastening flanges (7) merges into the respective sealing web (6) via a 90° fold (17).

7. Connector assembly according to one of the preceding claims, in which the further profile side (18) is arranged parallel and spaced apart from the fastening flange (7) of the profile frame (2).

8. Connector assembly according to claim 1, in which the fastening means (20) is a fastening bolt, for instance a threaded bolt.

9. Connector assembly according to claim 1, in which the fastening sides (22) of the line-up connector (9) are connected to one another via a connecting side (23), wherein, in a respective transition region (24) between the connecting side (23) and one of the two fastening sides (22), the line-up connector (9) bears against one of the two sealing webs (6), and wherein the connecting side (23) projects beyond an abutment region, in which the sealing webs (6) adjoin one another via a sealing element (10) arranged between them, at a distance from the sealing webs (6), such that a free space (25) is formed between the sealing webs (6) and the connecting side (23), into which free space the sealing element (10) projects.

10. Connector assembly according to claim 9, in which the connecting side (23) has at least one arrow punch (26), into which a threaded bolt (20) projects, via which the line-up connector (9) is fixed to one of the fastening flanges (7), wherein at least one clamping tooth (29) on a border (30) of the arrow punch (26) engages under pretension in a thread (28) of the threaded bolt (20) and thus fixes the threaded bolt (20).

11. Connector assembly according to claim 10, in which the threaded bolt (20) has a conical tip (27) which merges into the thread (28) of the threaded bolt (20), such that, when the line-up connector (9) is fixed to one of the fastening flanges (7), the at least one clamping tooth (29) is pretensioned along the conical tip (27) widening in the bolt longitudinal direction.

## Revendications

1. Dispositif de raccordement qui comprend un premier et un deuxième châssis d'armoire de commande (1), qui présentent chacun un cadre profilé latéral rectangulaire (2) constitué de deux entretoises verticales (3) et de deux entretoises horizontales (4), dans lequel les cadres profilés (2) sont reliés entre eux par l'intermédiaire d'un connecteur en série (9), dans lequel les châssis d'armoire de commande (1) sont délimités l'un par rapport à l'autre par l'intermédiaire d'arêtes d'étanchéité externes (5) des cadres profilés (2) et les arêtes d'étanchéité externes (5) sont disposées au niveau de l'extrémité libre respective d'une nervure d'étanchéité (6) du cadre profilé (2), dans lequel les nervures d'étanchéité (6) permettent de plier respectivement une bride de fixation (7) en retrait de l'arête d'étanchéité externe (5), de sorte que les brides de fixation (7) qui se font face délimitent entre elles un logement (8) pour le connecteur en série (9) pour les cadres profilés (2), qui est en outre délimité par les nervures d'étanchéité (6) adjacentes et un élément d'étanchéité (10) disposé entre les nervures d'étanchéité (6), dans lequel le connecteur en série (9) comprend deux faces de fixation (22) opposées par l'intermédiaire desquelles il est fixé au niveau respectivement d'une des brides de fixation (7) opposées, dans lequel le connecteur en série (9) est disposé dans le logement (8), qui est fixé aux brides de fixation (7) opposées, dans lequel au moins un des cadres profilés (2) comprend, au niveau de sa face externe opposée à son arête d'étanchéité (5), une autre face profilée (18) qui est disposée à distance de la bride de fixation (7) du cadre profilé (2), **caractérisé en ce que** la bride de fixation (7) et l'autre face profilée (18) distante de celle-ci comprennent chacune au moins un passage (19) pour un moyen de fixation (20) et dans lequel au moins un des passages (19) de la bride de fixation (7) est aligné avec au moins un des passages (19) de l'autre face profilée (18), dans lequel le moyen de fixation (20) s'étend de la face externe opposée à l'arête d'étanchéité (5) à travers les passages (19) alignés vers l'intérieur du logement (8) et dans lequel le moyen de fixation (20) est fixé, au niveau de son extrémité libre, par l'intermédiaire de laquelle le moyen de fixation (20) pénètre dans le logement (8), dans un logement de fixation (21) dans une face de fixation (22) du connecteur en série (9), par l'intermédiaire de laquelle le connecteur en série (9) s'appuie contre une des brides de fixation (7).

2. Dispositif de raccordement selon la revendication 1, dans lequel au moins une des arêtes d'étanchéité externes (5) est constitué par un pliage de plus de 180°, de sorte que la nervure d'étanchéité (6) rétrécit et/ou est réalisée avec une contre-dépouille, de l'arête d'étanchéité (5) en direction de la bride de fixation (7).

3. Dispositif de raccordement selon la revendication 2, dans lequel, par l'intermédiaire de l'arête d'étanchéité (5) d'au moins une des nervures d'étanchéité (6), un joint d'étanchéité enfichable (10) est enfiché sur la nervure d'étanchéité (6), qui comprend une rainure (12) qui rétrécit en direction de son ouverture (11).

4. Dispositif de raccordement selon la revendication 3, dans lequel la rainure (12) est délimitée par deux parois latérales (13), convergeant l'une vers l'autre de manière conique, du joint d'étanchéité enfichable (10), dans lequel au moins une des parois latérales (13) comprend une saillie (14) rétrécissant encore la rainure (12).

5. Dispositif de raccordement selon la revendication 3 ou 4, dans lequel la rainure (12) est délimitée par deux parois latérales (13) entre les extrémités libres desquelles est réalisée l'ouverture (11) de la rainure (12) et dans lequel la rainure (12) est en outre délimitée par une paroi arrière (15) reliant les parois latérales (13) par l'intermédiaire de ses extrémités en face des extrémités libres, qui comprend, sur sa face interne orientée vers la rainure (12), un agent adhésif (16), plus particulièrement une couche de colle.

6. Dispositif de raccordement selon l'une des revendications précédentes, dans lequel au moins une des brides de fixation (7) se prolonge par la nervure d'étanchéité (6) respective par l'intermédiaire d'un pliage à 90° (17).

7. Dispositif de raccordement selon l'une des revendications précédentes, dans lequel l'autre face profilée (18) est disposée parallèlement à distance de la bride de fixation (7) du cadre profilé (2).

8. Dispositif de raccordement selon la revendication 1, dans lequel le moyen de fixation (20) est une tige de fixation, par exemple une tige filetée.

9. Dispositif de raccordement selon la revendication 1, dans lequel les faces de fixation (22) du connecteur en série (9) sont reliées entre elles par l'intermédiaire d'une face de raccordement (23), dans lequel, dans une zone de transition (24) respective entre la face de raccordement (23) et une des deux faces de fixation (22), le connecteur en série (9) s'appuie contre une des deux nervures d'étanchéité (6) et dans lequel la face de raccordement (23) dépasse d'une zone d'aboutement, dans laquelle les nervures d'étanchéité (6) se délimitent entre elles par l'intermédiaire d'un élément d'étanchéité (10) disposé entre elles, avec une distance par rapport aux nervures d'étanchéité (6), de sorte qu'un espace libre (25) est formé entre les nervures d'étanchéité (6) et la face de raccordement (23), dans lesquelles pénètre l'élément d'étanchéité (10).

10. Dispositif de raccordement selon la revendication 9, dans lequel la face de raccordement (23) comprend au moins un poinçonnage de flèche (26) dans lequel une pénètre une tige filetée (20), par l'intermédiaire de laquelle le connecteur en série (9) est fixé à une des brides de fixation (7), dans lequel au moins une dent de blocage (29) s'emboîte au niveau d'un rebord (30) du poinçonnage de flèche (26) dans un filetage (28) de la tige filetée (20) sous précontrainte et fixe donc la tige filetée (20).

11. Dispositif de raccordement selon la revendication 10, dans lequel la tige filetée (20) présente une pointe de cône (27) qui se prolonge par le filetage (28) de la tige filetée (20), de sorte que, lors de la fixation du connecteur en série (9) à une des brides de fixation (7), l'au moins une dent de blocage (29) est précontrainte le long de la pointe de cône (27) s'élargissant dans la direction longitudinale de la tige.
